# EUROPEAN PATENT APPLICATION

(11) **EP 4 734 423 A1**
(43) Date of publication of application: **29.04.2026**
(21) Application number: 23942694.3
(22) Date of filing: 25.06.2023
(51) Int. Cl.: H04L 5/00

(54) **INFORMATION PROCESSING METHOD, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Dehns Germany Partnerschaft mbB
(86) International application number: PCT/CN2023/102236
(87) International publication number: WO 2025/000163

(57) **Abstract**

Embodiments of the present disclosure relate to an information processing method, a communication device, a communication system, and a storage medium. The information processing method comprises: a first device receiving a first signal, the first signal comprising first information; and determining a first operation on the basis of the first information. The first operation comprises at least one of the following: whether to reside in the network in which a network device is located, and whether to send second information. In this way, the first device can accurately determine a scenario for responding to the first signal, such as whether to reside in the network in which a network device is located, and/or whether to report the first information. In addition, the reliability and effectiveness of the first device reporting the first information are increased.

## Description

### TECHNICAL FIELD

The present disclosure relates to the field of communication technology, in particular, to an information processing method, a first device, a network device, a communication system, and a storage medium.

### BACKGROUND

In the field of communication technology, some IoT (Internet of Things) devices can be powered by collecting ambient energy. For example, in general, these IoT devices can collect radio waves, light, motion, heat, or any other suitable power sources to provide energy.

### SUMMARY

Embodiments of the present disclosure solve a reliability problem of the data reporting by a first device.

Embodiments of the present disclosure provide an information processing method, a first device, a network device, a communication system, and a storage medium.

According to a first aspect of embodiments of the present disclosure, an information processing method is provided, including: receiving, by a first device, a first signal, wherein the first signal includes first information; and determining a first operation based on the first information, wherein the first operation includes at least one of: whether to camp on a network where a network device is located, or whether to send second information.

According to a second aspect of embodiments of the present disclosure, an information processing method is provided, including: sending, by a network device, a first signal, wherein the first signal includes first information configured for a first device to determine a first operation, and the first operation includes at least one of: whether to camp on a network where the network device is located, or whether to send second information.

According to a third aspect of embodiments of the present disclosure, an information processing method is provided, including: sending, by a network device, a first signal to a first device, the first signal including first information; and determining, by the first device, a first operation based on the first information, wherein the first operation includes at least one of: whether to camp on a network where the network device is located, or whether to send second information.

According to a fourth aspect of embodiments of the present disclosure, a first device is provided, including: a first transceiver module configured to receive a first signal, wherein the first signal includes first information; and a first processing module configured to determine a first operation based on the first information, wherein the first operation includes at least one of: whether to camp on a network where a network device is located, or whether to send second information.

According to a fifth aspect of embodiments of the present disclosure, a network device is provided, including: a second transceiver module configured to send a first signal, wherein the first signal includes first information configured for a first device to determine a first operation, wherein the first operation includes at least one of: whether to camp on a network where the network device is located, or whether to send second information.

According to a sixth aspect of embodiments of the present disclosure, a first device is provided, including one or more processors, wherein the first device is configured to perform an optional implementation of the first aspect.

According to a seventh aspect of embodiments of the present disclosure, a network device is provided, including one or more processors, wherein the network device is configured to perform an optional implementation of the second aspect.

According to an eighth aspect of embodiments of the present disclosure, a communication system is provided, including a first device and a network device, wherein the first device is configured to perform a method as described in an optional implementation of the first aspect, and the network device is configured to perform a method as described in an optional implementation of the second aspect.

According to a ninth aspect of embodiments of the present disclosure, a storage medium is provided, the storage medium stores instructions, which when executed on a communication device, cause the communication device to perform a method as described in the first aspect, the second aspect, the third aspect, or optional implementations of the first, second, and third aspects.

Embodiments of the present disclosure can improve the reliability of the data reporting by the first device.

### BRIEF DESCRIPTION OF THE DRAWINGS

In order to more clearly explain the technical solutions in embodiments of the present disclosure, the drawings required for describing the embodiments are introduced below. These drawings are merely some embodiments of the present disclosure and do not impose specific limitations on the protection scope of the present disclosure.
FIG. 1A is a schematic diagram of a structure of an information processing system according to embodiments of the present disclosure.
FIG. 1B is a schematic diagram illustrating backscatter according to embodiments of the present disclosure.
FIG. 1C is a schematic diagram of an architecture of a network topology according to embodiments of the present disclosure.
FIG. 1D is a schematic diagram of an architecture of a network topology according to embodiments of the present disclosure.
FIG. 1E is a schematic diagram of an architecture of a network topology according to embodiments of the present disclosure.
FIG. 1F is a schematic diagram of an architecture of a network topology according to embodiments of the present disclosure.
FIG. 1G is a schematic diagram of a type of an ambient IoT according to embodiments of the present disclosure.
FIG. 2 is a schematic diagram illustrating interaction for an information processing method according to embodiments of the present disclosure.
FIG. 3A is a schematic flowchart of an information processing method according to embodiments of the present disclosure.
FIG. 3B is a schematic flowchart of an information processing method according to embodiments of the present disclosure.
FIG. 3C is a schematic flowchart of an information processing method according to embodiments of the present disclosure.
FIG. 4A is a schematic flowchart of an information processing method according to embodiments of the present disclosure.
FIG. 4B is a schematic flowchart of an information processing method according to embodiments of the present disclosure.
FIG. 5 is a schematic flowchart of an information processing method according to embodiments of the present disclosure.
FIG. 6 is a schematic diagram of ambient IoT filtering based on a validity stamp according to embodiments of the present disclosure.
FIG. 7A is a schematic diagram of a structure of a first device according to embodiments of the present disclosure.
FIG. 7B is a schematic diagram of a structure of a network device according to embodiments of the present disclosure.
FIG. 8A is a schematic diagram of a structure of a communication device according to embodiments of the present disclosure.
FIG. 8B is a schematic diagram of a structure of a chip according to embodiments of the present disclosure.

### DETAILED DESCRIPTION

Embodiments of the present disclosure provide an information processing method, a first device, a network device, a communication system, and a storage medium.

In a first aspect, embodiments of the present disclosure provide an information processing method, including: receiving, by a first device, a first signal, wherein the first signal includes first information; and determining a first operation based on the first information, wherein the first operation includes at least one of the following: whether to camp on a network where a network device is located, or whether to send second information.

In the above embodiments, the first device can be allowed to accurately determine the response to the first signal, for example, whether to camp on the network where the network device is located, and/or whether to report the second information, thereby improving the reliability and the validity of the second information reported by the first device.

In combination with some embodiments of the first aspect, in some embodiments, the first information includes a valid identifier set, the valid identifier set includes at least one first valid identifier, and determining the first operation based on the first information includes: determining, based on whether a second valid identifier of the first device matches the first valid identifier, whether to send the second information.

In the above embodiments, based on whether the second valid identifier configured by the first device matches the first valid identifier issued by the network device or not, the first device can accurately determine whether to report the second information in response to the first signal.

In combination with some embodiments of the first aspect, in some embodiments, determining, based on whether the second valid identifier of the first device matches the first valid identifier, whether to send the second information includes one of the following:
based on that the second valid identifier matches the first valid identifier, determining to send the second information; and
based on that the second valid identifier does not match the first valid identifier, determining not to send the second information.

In the above embodiments, the first device can specifically determine to report the second information when the second valid identifier matches the first valid identifier, or not to report the second information when the second valid identifier does not match the first valid identifier, thereby improving the reliability and the validity of the data reported by the first device.

In combination with some embodiments of the first aspect, in some embodiments, the method further includes: determining, based on that the second valid identifier does not match the first valid identifier, that the first device becomes invalid.

In the above embodiments, it is possible to accurately determine that the first device has become invalid, allowing the first device to end its life cycle, and reducing the energy consumption, etc.

In combination with some embodiments of the first aspect, the first valid identifier includes at least one of a first validity stamp or a first validity code; and/or, the second valid identifier includes at least one of a second validity stamp or a second validity code.

In the above embodiments, multiple types of first valid identifiers and/or second valid identifiers are provided, so that they are applicable to more application scenarios.

In combination with some embodiments of the first aspect, in some embodiments, the first information includes a first identifier, the first identifier is used to identify a network device, and determining the first operation based on the first information includes one of the following:
based on that any second identifier in an identifier set configured matches the first identifier, determining to camp on the network where the network device is located; and
based on that any second identifier does not match the first identifier, determining not to camp on the network where the network device is located.

In the above embodiments, it is possible for the first device to accurately identify the network where the network device is located and to determine whether it can camp on the network where the network device is located.

In combination with some embodiments of the first aspect, in some embodiments, the first information is configured to indicate a first parameter that is recommended, and determining the first operation based on the first information includes one of the following:
determining, based on a second parameter of the first device and the first parameter, whether to send the second information; and
determining, based on the second parameter of the first device and a third parameter, whether to send the second information, wherein the third parameter is determined based on the first parameter.

In the above embodiments, the invalid first device can be filtered out by configuring the recommended first parameter.

In combination with some embodiments of the first aspect, in some embodiments, determining, based on the second parameter of the first device and the first parameter, whether to send the second information, includes one of the following:
based on that the second parameter of the first device is greater than or equal to the first parameter, determining to send the second information; and
based on that the second parameter of the first device is less than the first parameter, determining not to send the second information, wherein the first parameter is a threshold value of a reference signal, and the second parameter is a measured value of the reference signal; or the first parameter is a first UL transmit power, and the second parameter is a second UL transmit power.

In the above embodiments, the first device whose transmit power does not meet the reception requirement of the network device can be filtered out by using the threshold value of the reference signal or the recommended UL transmit power, thereby filtering out the first device.

In combination with some embodiments of the first aspect, in some embodiments, determining, based on the second parameter of the first device and the third parameter, whether to send the second information, includes one of the following:
based on that the second parameter of the first device is greater than or equal to the third parameter, determining to send the second information; and
based on that the second parameter of the first device is less than the third parameter, determining not to send the second information, wherein the second parameter is a second UL transmit power, the third parameter is a third UL transmit power, and the first parameter includes at least one of the following: a first UL transmit power, a UL transmit power parameter, a path loss, or a UL transmit power offset.

In the above embodiments, a recommended UL transmit power can be further determined based on at least one power-related value recommended by the network device, and first device(s) whose transmit power(s) do not meet the reception requirement of the network device can be filtered out based on the value of the UL transmit power calculated by the first device and the value of the recommended UL transmit power, and thus filtering out the invalid first device(s), which achieves diverse filtering modes.

In combination with some embodiments of the first aspect, in some embodiments, the network device includes one of the following: a base station, a relay, an IAB, a user equipment (UE), and a repeater.

In the above embodiments, it is possible to achieve the validity detection on the first device by multiple types of network devices, ensuring that the data reported by the first device is reasonable and valid.

In a second aspect, embodiments of the present disclosure provide an information processing method, including: sending, by a network device, a first signal, wherein the first signal includes first information configured for a first device to determine a first operation, and the first operation includes at least one of the following: whether to camp on a network where the network device is located, or whether to send second information.

In combination with some embodiments of the second aspect, in some embodiments, the first information includes a valid identifier set, the valid identifier set includes at least one first valid identifier, and the first information is configured for the first device to determine, based on whether a second valid identifier of the first device matches the first valid identifier, whether to send the second information.

In combination with some embodiments of the second aspect, in some embodiments, the first information is configured for the first device to determine, based on that the second valid identifier matches the first valid identifier, to send the second information; or the first information is configured for the first device to determine, based on that the second valid identifier does not match the first valid identifier, not to send the second information.

In combination with some embodiments of the second aspect, in some embodiments, the first information is further configured for the first device to determine, based on that the second valid identifier does not match the first valid identifier, that the first device becomes invalid.

In combination with some embodiments of the second aspect, in some embodiments, the first valid identifier includes at least one of a first validity stamp or a first validity code; and/or, the second valid identifier includes at least one of a second validity stamp or a second validity code.

In combination with some embodiments of the second aspect, in some embodiments, the first information includes a first identifier used to identify a network device, and the first identifier is used for one of the following:
the first device determines to camp on the network where the network device is located when determining that any second identifier in an identifier set configured matches the first identifier; and
the first device determines not to camp on the network where the network device is located when determining that any second identifier in the identifier set configured does not match the first identifier.

In combination with some embodiments of the second aspect, in some embodiments, the first information is configured to indicate a first parameter that is recommended, and the first parameter is used for one of the following:
based on that the second parameter of the first device is greater than or equal to the first parameter, the first device determines to send the second information;
based on that the second parameter of the first device is less than the first parameter, the first device determines not to send the second information;
based on that the second parameter of the first device is greater than or equal to a third parameter, the first device determines to send the second information, wherein the third parameter is determined based on the first parameter; and
based on that the second parameter of the first device is less than the third parameter, the first device determines not to send the second information.

In combination with some embodiments of the second aspect, in some embodiments, the first parameter is a threshold value of a reference signal, and the second parameter is a measured value of the reference signal; or the first parameter is a first UL transmit power, and the second parameter is a second UL transmit power.

In combination with some embodiments of the second aspect, in some embodiments, the second parameter is a second UL transmit power, the third parameter is a third UL transmit power, and the first parameter includes at least one of the following: a first UL transmit power, a UL transmit power parameter, a path loss, or a UL transmit power offset.

In combination with some embodiments of the second aspect, in some embodiments, the network device includes one of the following: a base station, a relay, an IAB, a user equipment (UE), and a repeater.

In a third aspect, embodiments of the present disclosure provide an information processing method, including: sending, by a network device, a first signal to a first device, the first signal including first information; and determining, by the first device, a first operation based on the first information, wherein the first operation includes at least one of the following: whether to camp on a network where the network device is located, or whether to send second information.

In combination with some embodiments of the third aspect, in some embodiments, the first information includes a first identifier used to identify the network device, and determining the first operation based on the first information includes one of the following:
based on that any second identifier in an identifier set configured matches the first identifier, determining to camp on the network where the network device is located; and
based on that any second identifier does not match the first identifier, determining not to camp on the network where the network device is located.

In combination with some embodiments of the third aspect, in some embodiments, the first information includes a valid identifier set, the valid identifier set includes at least one first valid identifier, and determining the first operation based on the first information includes: determining, based on whether a second valid identifier of the first device matches the first valid identifier, whether to send the second information.

In combination with some embodiments of the third aspect, in some embodiments, the first information is configured to indicate a first parameter that is recommended, and determining the first operation based on the first information includes one of the following:
based on that the second parameter of the first device is greater than or equal to the first parameter, determining to send the second information;
based on that the second parameter of the first device is less than the first parameter, determining not to send the second information;
based on that the second parameter of the first device is greater than or equal to a third parameter, determining to send the second information, wherein the third parameter is determined based on the first parameter; and
based on that the second parameter of the first device is less than the third parameter, determining not to send the second information.

In a fourth aspect, embodiments of the present disclosure provide a first device, including:
a first transceiver module configured to receive a first signal, wherein the first signal includes first information; and
a first processing module configured to determine a first operation based on the first information, wherein the first operation includes at least one of the following: whether to camp on a network where a network device is located, or whether to send second information.

In a fifth aspect, embodiments of the present disclosure provide a network device, including: a second transceiver module configured to send a first signal, wherein the first signal includes first information configured for a first device to determine a first operation, and the first operation includes at least one of the following: whether to camp on a network where the network device is located, or whether to send second information.

In a sixth aspect, embodiments of the present disclosure provide a first device including one or more processors, wherein the first device is configured to perform an optional implementation of the first aspect.

In a seventh aspect, embodiments of the present disclosure provide a network device including one or more processors, wherein the network device is configured to perform an optional implementation of the second aspect.

In an eighth aspect, embodiments of the present disclosure provide a communication system including a first device and a network device, wherein the first device is configured to perform the method described in the optional implementation of the first aspect, and the network device is configured to perform the method described in the optional implementation of the second aspect.

In a ninth aspect, embodiments of the present disclosure provide a storage medium having instructions stored thereon, which when executed on a communication device, cause the communication device to perform the method as described in the first aspect, the second aspect, the third aspect, or optional implementations of the first, second, and third aspects.

In a tenth aspect, embodiments of the present disclosure provide a program product, which when executed by a communication device, causes the communication device to perform the method as described in the first aspect, the second aspect, the third aspect, or optional implementations of the first, second, and third aspects.

In an eleventh aspect, embodiments of the present disclosure provide a computer program, which when run on a computer, causes the computer to perform an information processing method as described in the first aspect, the second aspect, the third aspect, or optional implementations of the first, second, and third aspects.

In a twelfth aspect, embodiments of the present disclosure provide a chip or a chip system, the chip or the chip system includes a processing circuit configured to perform the method as described in the optional implementations of the first, second, and third aspects.

It should be understood that the first device, the network device, the communication system, the storage medium, the program product, the computer program, the chip, or the chip system mentioned above are all used to perform the methods provided by embodiments of the present disclosure. Therefore, the beneficial effects that can be achieved can be referred to the beneficial effects in the corresponding methods, and will not be repeated here. It should be understood that the communication device includes the first device and/or the network device.

Embodiments of the present disclosure provide an information processing method, a first device, a network device, a communication system, and a storage medium. In some embodiments, terms such as "information processing method" and "communication method" are interchangeable, terms such as "information processing device" and "communication device" are interchangeable, and terms such as "information processing system" and "communication system" are interchangeable.

The embodiments of the present disclosure are not exhaustive, but merely illustrative of some embodiments, and are not intended to limit specifically the protection scope of the present disclosure. Where there is no contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily interchanged. In addition, the optional implementations in a certain embodiment can be arbitrarily combined. In addition, the embodiments can be arbitrarily combined. For example, some or all steps of different embodiments can be arbitrarily combined, and a certain embodiment can be arbitrarily combined with the optional implementations of other embodiments.

In all embodiments of the present disclosure, unless otherwise specified or logically conflicting, the terminology and/or descriptions are consistent across embodiments and can be referenced interchangeably. Technical features from different embodiments can be combined to form new embodiments based on their inherent logical relationships.

The terminology used in these embodiments is for the purpose of describing specific embodiments only and is not intended to limit the present disclosure.

In embodiments of the present disclosure, unless otherwise specified, elements expressed in the singular form, such as "a", "an", "the", "above", "said", "aforementioned", "this", etc., can mean "one and only one", "one or more", or "at least one" etc. For example, when using articles such as "a", "an", and "the" in the translation, the noun following the article can be understood as either a singular expression or a plural expression.

In embodiments of the present disclosure, "multiple" refers to two or more.

In some embodiments, terms such as "at least one of', "at least one item of', "at least one", "one or more", "a plurality of", and "multiple" can be used interchangeably.

In some embodiments, expressions such as "at least one of A and B", "A and/or B", "in the case of A, and in another case of B", and "in response to a case A, and in response to another case B" can, depending on the context, include the following technical solutions: in some embodiments, A (executed regardless of B); in some embodiments, B (executed regardless of A); in some embodiments, execution is performed selectively from A and B (A and B are selectively executed); and in some embodiments, both A and B are executed. The same applies when there are more branches such as A, B, and C.

In some embodiments, the expression "A or B" can, depending on the context, include the following technical solutions: in some embodiments, A (executed regardless of B); in some embodiments, B (executed regardless of A); in some embodiments, execution is performed selectively from A and B (A and B are selectively executed). The same applies when there are more branches such as A, B, and C.

The prefixes such as "first" and "second" in the embodiments of the present disclosure are only for distinguishing different descriptive objects and do not constitute restrictions on the positions, orders, priority, quantity, or contents of the descriptive objects. For the statements of the descriptive objects, please refer to the claims or the description in the context of the embodiments. The use of prefixes should not constitute unnecessary restrictions. For example, if the descriptive object is a "field", then the ordinal numbers before "field" in the "first field" and the "second field" do not restrict the position or the order between the "fields", and the "first" and the "second" do not restrict whether the "fields" they modify are in the same message, nor do they restrict the order of the "first field" and the "second field." For another example, if the descriptive object is a "level", then the ordinal numbers before "level" in the "first level" and the "second level" do not restrict the priority between "levels". In addition, the number of objects described is not limited by the ordinal number, it can be one or more. For example, in the "first device", the number of "devices" can be one or more. In addition, objects modified by different prefixes can be the same or different. For example, if the object is described as "device", then the "first device" and the "second device" can be the same device or different devices, and their types can be the same or different. Similarly, if the object is described as "information", then the "first information" and the "second information" can be the same information or different information, and their contents can be the same or different.

In some embodiments, "including A", "containing A", "for indicating A", and "carrying A" can be interpreted as directly carrying A or indirectly indicating A.

In some embodiments, terms such as "in response to...", "in response to determining... ", "in the case of... ", "when... ", "if... ", etc., can be interchanged.

In some embodiments, terms such as "greater than", "greater than or equal to", "not smaller than", "more than", "more than or equal to", "not less than", "higher than", "higher than or equal to", "not lower than", and "above" are interchangeable. Terms such as "smaller than", "smaller than or equal to", "not greater than", "less than", "less than or equal to", "not more than", "lower than", "lower than or equal to", "not higher than", and "below" are interchangeable.

In some embodiments, "device" can be interpreted as physical or virtual, and its name is not limited to the names described in the embodiments. Terms such as "apparatus", "equipment", "device", "circuit", "network element", "node", "function", "unit", "section", "system", "network", "chip", "chip system", "entity", and "body" are interchangeable.

In some embodiments, the "network" can be interpreted as devices included in the network (e.g., access network device, core network device, etc.).

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", and "bandwidth part (BWP)" are interchangeable.

In some embodiments, terms such as "terminal", "terminal device", "user equipment (UE)", "user terminal", and "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", and "client" are interchangeable.

In some embodiments, the access network device, the core network device, or the network device can be replaced with the terminal. For example, the communication between the access network device, the core network device, or the network device and the terminal can be replaced with communication between multiple terminals (e.g., also referred to as device-to-device (D2D), vehicle-to-everything (V2X), etc.). In this case, the terminal can also be configured such that a structure of the terminal can perform all or part of the functions of the access network device. In addition, terms such as "uplink" and "downlink" can be replaced with terms corresponding to inter-terminal communication (e.g., "sidelink"). For example, the uplink channel, the downlink channel, etc., can be replaced with the sidelink channel, and the uplink link, the downlink link, etc., can be replaced with the sidelink link.

In some embodiments, the terminal can be replaced with the access network device, the core network device, or the network device. In this case, the access network device, the core network device, or the network device can also be configured such that a structure of the access network device, the core network device, or the network device can perform all or part of the functions of the terminal.

In some embodiments, the obtaining of data, information, etc., can comply with the laws and regulations of the country where the location is situated.

In some embodiments, data, information, etc., can be acquired after obtaining user's consent.

In addition, each element, each row, or each column in the tables of the present disclosure can be implemented as an independent embodiment, and any combination of any element, any row, or any column can also be implemented as an independent embodiment.

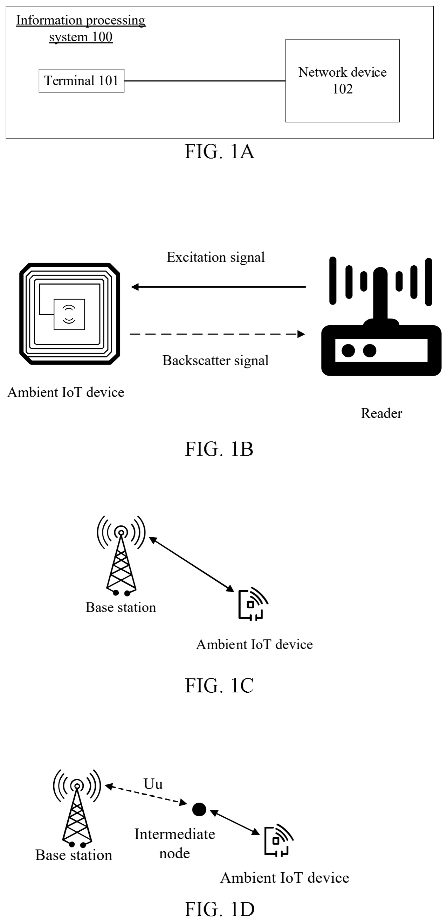

FIG. 1A is a schematic diagram of a structure of an information processing system 100 according to embodiments of the present disclosure. As shown in FIG. 1A, the information processing system 100 can include a terminal 101 and a network device 102.

In some embodiments, the network device 102 can include at least one of an access network device or a core network device.

In some embodiments, the terminal 101 includes, for example, at least one of the following: a mobile phone, a wearable device, an IoT device or terminal, a car with communication capabilities, a smart car, a pad, a computer with wireless transceiver capabilities, a VR (virtual reality) terminal device, an AR (augmented reality) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, or a wireless terminal device in smart home, but it is not limited to these.

In some embodiments, the access network device is, for example, a node or device that connects the terminal to a wireless network. The access network device can include at least one of the following: an evolved Node B (eNB) in a 5G communication system, a next generation eNB (ng-eNB), a next generation NodeB (gNB), a node B (NB), a home node B (HNB), a home evolved nodeB (HeNB), a radio backhaul equipment, a radio network controller (RNC), a base station controller (BSC), a base transceiver station (BTS), a base band unit (BBU), a mobile switching center, a base station in a 6G communication system, an Open RAN, a Cloud RAN, a base station in other communication systems, or an access node in the wireless fidelity (Wi-Fi) system, but it is not limited to these.

In some embodiments, the technical solutions of the present disclosure are applicable to Open RAN architectures. In this case, the interfaces between or within access network devices involved in the embodiments of the present disclosure can become internal interfaces of Open RAN. The processes and information interactions between these internal interfaces can be implemented through software or programs.

In some embodiments, the access network device can be composed of a central unit (CU) and a distributed unit (DU). The CU can also be referred to as a control unit. Using a CU-DU structure can separate the protocol layers of the access network device. Some protocol layer functions are centrally controlled by the CU, while the remaining part or all protocol layer functions are distributed in the DU, which is centrally controlled by the CU. However, the present disclosure is not limited to this.

In some embodiments, the core network equipment can be a single device, including a first network element, a second network element, etc., or the core network equipment can be multiple devices or a group of devices, each including all or part of the first network element and the second network element mentioned above. The network elements can be virtual or physical. The core network includes, for example, at least one of the Evolved Packet Core (EPC), the 5G Core Network (5GCN), or the Next Generation Core (NGC).

It should be understood that the information processing system described in the embodiments of the present disclosure is for the purpose of more clearly illustrating the technical solutions of the embodiments of the present disclosure, and does not constitute a limitation on the technical solutions provided by the embodiments of the present disclosure. Those skilled in the art will recognize that, with the evolution of the system architecture and the emergence of new service scenarios, the technical solutions provided by the embodiments of the present disclosure are also applicable to similar technical problems.

The following embodiments of the present disclosure can be applied to the information processing system 100 shown in FIG. 1A, or some of its entities, but are not limited to this. The entities shown in FIG. 1A are illustrative, the communication system can include all or some of the entities in FIG. 1A, or other components not shown in FIG. 1A. The number and form of each entity are arbitrary. The connection relationships between the entities are illustrative, the entities can be unconnected or connected, and the connection can be in any manner, including direct or indirect connections, wired or wireless connections.

The embodiments of the present disclosure can be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM^{™}), CDMA2000, Ultra Mobile Broadband (UMB), IEEE 802.11 (Wi-Fi^{™}), IEEE 802.16 (WiMAX^{™}), IEEE 802.20, Ultra-Wide Band (UWB), Bluetooth^{™}, Public Land Mobile Network (PLMN) network, Device-to-Device (D2D) system, Machine-to-Machine (M2M) system, Internet of Things (IoT) system, Vehicle-to-Everything (V2X) system, systems utilizing other communication methods, and next-generation systems built upon them, etc. In addition, multiple systems can be combined (e.g., a combination of LTE or LTE-A with 5G, etc.) and applied.

In some embodiments, in general, some IoT devices are powered by conventional batteries with a limited lifespan, negatively impacting user experience. The astronomical growth of IoT networks, coupled with the sheer number of IoT devices, has pushed maintenance expenses, including labor and battery costs, to an unprecedented level. Billions of conventional batteries are discarded annually, with only a fraction being effectively recycled, causing harmful impacts on the Earth's ecosystem. Maintaining the operation of IoT networks and replacing batteries can be extremely challenging under extreme ambient conditions. In this regard, battery-free IoT communication has been proposed, which will improve the performance and the sustainability of the network, and expand application scenarios. Furthermore, battery-free communication is more ambient friendly and safer for children and the elderly. By eliminating traditional batteries, the device size and the cost can be significantly reduced, paving the way for a variety of new applications.

In some embodiments, in the 5G era of the 5th generation mobile communication technology, various Low Power Wide Area (LPWA) technologies have been developed, such as Machine Type Communication (MTC), Narrow Band Internet of Things (NB-IoT), and Reduced Capability (RedCap), etc., to meet the growing needs of vertical industries. These LPWA technologies achieve low cost, low power consumption, and massive connectivity, meeting the requirements of many applications. However, many use cases and applications remain unresolved. First, devices powered by traditional batteries are unsuitable, for example, under extreme ambient conditions (e.g., high pressure, extremely high/low temperatures, humid environments). Second, maintenance-free devices are required (e.g., devices without the need to replace traditional batteries). Finally, there is a need for ultra-low complexity, very small device size/shape factor (e.g., thickness in millimeters), and longer lifespan, etc.

In some embodiments, the ambient-powered IoT is a promising technology that can meet the unmet needs mentioned above. The ambient-powered IoT devices are IoT devices that are powered through energy collection, which have no batteries or limited energy storage capacity (e.g., using capacitors), can provide energy by collecting radio waves, light, motion, heat, or any other suitable power sources.

In some embodiments, the energy collected from ambiance can drive data transmission and wireless communication of a sensing node. The current mainstream low power consumption IoT communication chips (e.g., Bluetooth Low Energy (BLE), LoRa, NB-IoT) consume tens or even hundreds of milliwatts of power for transmission and reception, while ambient energy collected yields only microwatts, insufficient to power these types of nodes. Therefore, a new wireless communication technology is needed to reduce the communication power consumption to tens or even below ten microwatts. Currently, the mainstream approach is to use Backscatter Communication technology. The Backscatter Communication is one of key technologies for building a green, energy-efficient, low-cost, and flexibly deployable future IoT, and is an important means of realizing "Internet of Everything".

In some embodiments, as shown in FIG. 1B, the Backscatter Communication utilizes the principle of the backscattering of radio frequency signals to design an extremely low-power modulation and transmission technology. The Backscatter Communication is first proposed by Stockman, and works by reflecting a portion of the radio frequency signal as the radio frequency signal reaches the surface of an object. A transmitting node adjusts the matching between the receiving antenna and impedance according to the information to be transmitted, enhancing the reflection of an incident radio frequency signal and modulating its acquired sensing data onto a reflected signal to complete data transmission. This process is similar to a reflector. Compared to other communication technologies, the Backscatter Communication does not require complex radio frequency structures, reducing the use of power amplifiers, high-precision crystal oscillators, duplexers, high-precision filters, and other components. The Backscatter Communication also does not require complex baseband processing, and thus simplifying terminal design and significantly reducing terminal node costs.

In some embodiments, the Backscatter Communication has been widely applied in Radio Frequency Identification (RIFD) systems, resulting in many large-scale commercial applications. The working principle is that the receiver (usually an RFID reader) sends a radio frequency excitation signal to activate a passive node (usually an RFID electronic tag). The electronic tag uses the Backscatter Communication to modulate its own information onto the radio frequency signal. The reader receives the reflected signal from the passive electronic tag and demodulates the reflected signal to achieve the information transmission.

In some embodiments, the RFID technology also has many drawbacks, such as short coverage distance (the wireless signal experiences double path fading during the communication, resulting in the high path loss and the short effective communication distance), single-channel transmission, the need for strict tag alignment, and the lack of power control, etc. The RFID technology has significant room for improvement in communication. There is need for integrating 3GPP communication technology to improve the wireless communication performance of RFID technology in the passive IoT.

The new type of IoT device needs to have capabilities of low memory, low processing capability, low power, small data transmission, and mass deployment, etc. The ambient IoT device should be maintenance-free and has a long service life (e.g., over 10 years).

The new type of IoT device needs to collect radio waves transmitted by network nodes to obtain energy before it can drive itself and operate. Therefore, before obtaining the energy, the IoT device is usually in a "shutdown" state, i.e., offline state. Therefore, the communication system needs to support data communication modes with shorter transmission times, lower memory consumption, and more convenient terminal management to complete the data communication process as quickly as possible.

In some embodiments, a network topology architecture for wireless communication across ambient energy-based devices is implemented using the backscatter technology. For example, the network topology construction can include one of the following.

Topology 1: referring to FIG. 1C, downlink (DL) and uplink (UL) data are directly received and transmitted between ambient IoT devices supporting the ambient power and base stations.

Topology 2: referring to FIG. 1D, DL and UL data are indirectly received and transmitted between ambient IoT devices and base stations, an intermediate node, such as a relay, an Integrated Access Backhaul (IAB), a user equipment (UE), and/or a repeater, is located between them, and acts as a forwarder.

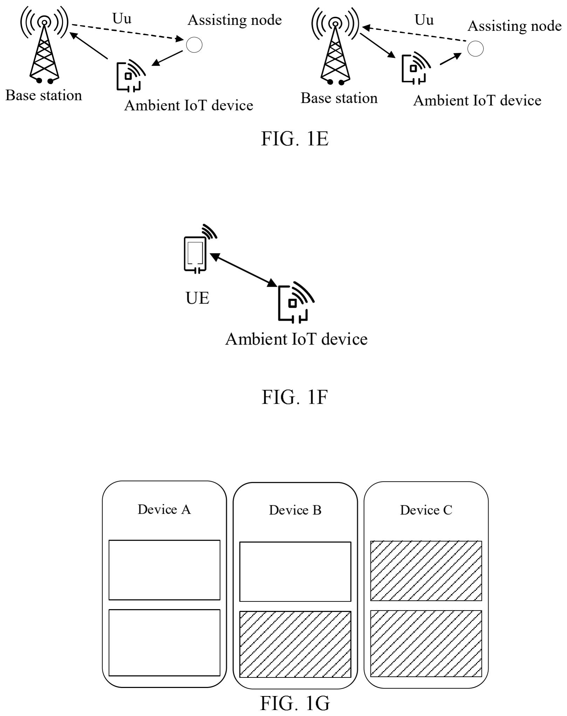

Topology 3: referring to FIG. 1E, DL or UL data is directly received or transmitted between ambient IoT devices and base stations, and an assisting node, such as a relay, an IAB, a UE, and/or a repeater, is located at the UL or the DL, which is responsible for receiving or transmitting UL data or receiving DL data.

Topology 4: referring to FIG. 1F, DL and UL data are directly received and transmitted between ambient IoT devices and UEs, the UE is responsible for collecting data and forwarding the collected data to the network side.

In some embodiments, as shown in FIG. 1G, the ambient IoT devices can be divided into three types.

Device A: the device does not have energy storage, independent signal generation or amplification, i.e., the device uses backscatter transmission.

Device B: the device has energy storage, but does not have independent signal generation, i.e., the device uses backscatter transmission. The use of stored energy can include amplification of reflected signals.

Device C: the device has energy storage and independent signal generation, i.e., the device has active radio frequency (RF) components for transmission.

In some embodiments, the terminal determines which cell it can camp on based on the Public Land Mobile Network (PLMN) in the system broadcast. Then, the terminal determines, according to the S-criterion, whether it can camp on that cell and receive services. Optionally, only legitimate terminal users who have already registered with the network and been verified by the network can camp on the cell and prepare for service interaction.

In some embodiments, the network side triggers a mobile terminal (MT) or the terminal triggers a Mobile Origination (MO) call, regardless of which case, the network and the terminal first establish a dedicated connection, and the data interaction only occurs after the Access Stratum is safely activated. Optionally, in Multicast & Broadcast Service (MBS), the network side can trigger users within an MBS group to enter the Radio Resource Control (RRC) connection state via group paging, and then multicast data is issued. Users within the group are all legitimate users maintained by Non-access stratum (NAS) signaling.

In some embodiments, a problem of lack of user validity detection appears when the network side triggers a group of users and when some users within this group may have validity issues.

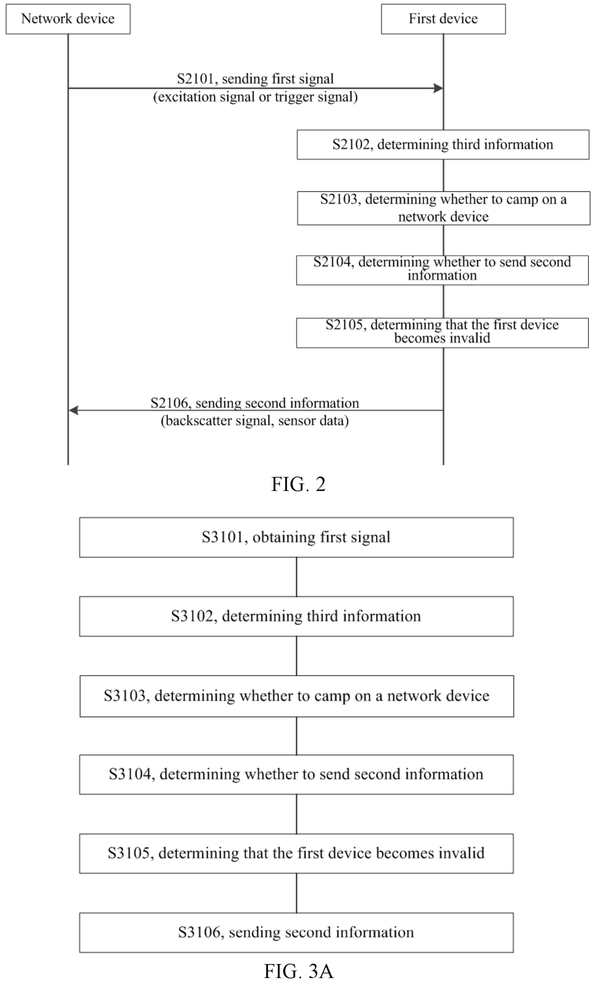

FIG. 2 is a schematic diagram illustrating interaction for an information processing method according to embodiments of the present disclosure. As shown in FIG. 2, the present disclosure relates to an information processing method used in an information processing system 100. The method includes following steps.

In step S2101, a network device sends a first signal to a first device.

In some embodiments, the first device receives the first signal sent by the network device.

In some embodiments, the first device can be a terminal, etc., as described in previous embodiments.

In some embodiments, the first device can be an IoT (Internet of Things) device. For example, the first device can be an ambient IoT.

In some embodiments, the network device includes at least one of the following: a base station, a relay, an Integrated Access Backhaul (IAB), a user equipment (UE), or a repeater.

In some embodiments, the network device can be at least one of an assisting node or an intermediate node, as described in previous embodiments.

In some embodiments, the network device can be referred to as a reader, and the first device can be referred to as a tag.

In some embodiments, the first signal includes first information, and the first information is used to determine a first operation. In some embodiments, the first operation includes at least one of the following: whether to camp on a network where the network device is located, or whether to send second information. In some embodiments, the first operation includes at least one of the following: camping or not camping on the network where the network device is located, or sending or not sending the second information.

In some embodiments, the first information is used to determine at least one of the following: whether to camp on the network where the network device is located, or whether to send the second information.

In some embodiments, the first signal is used by the first device to determine whether to camp on the network where the network device is located.

In some embodiments, the first signal is used by the first device to determine whether to send a second signal. In some embodiments, the first signal is used by the terminal to determine whether to send the second signal. In some embodiments, the second signal is sent in response to the first signal. In some embodiments, the second signal is sent via the backscatter.

In some embodiments, a name of the first signal is not limited, and the first signal is, for example, a trigger signal, or an excitation signal, etc.

In some embodiments, a name of the second signal is not limited, and the second signal is, for example, a backscatter signal.

In some embodiments, the first signal includes first information.

In some embodiments, the first information is configured for the first device to determine whether to camp on the network where the network device is located and/or whether to send the second information.

In some embodiments, a name of the first information is not limited, and the first information is, for example, identifier information, a network code, a validity stamp, or a validity code, etc.

In some embodiments, the first information includes a first identifier.

In some embodiments, the first identifier is used to identify the network device. For example, the first identifier is a network code. For example, the first identifier can be any character, index, or number used to identify the network device.

In some embodiments, the first identifier is used by the first device to determine whether to camp on the network where the network device is located.

In some embodiments, the first information includes a valid identifier set. In some embodiments, the valid identifier set includes at least one first valid identifier.

In some embodiments, the first valid identifier includes at least one of a first validity stamp or a first validity code. In some embodiments, the first valid identifier can also be a first valid tag.

In some embodiments, the first validity stamp can be any type of stamp or imprint.

In some embodiments, the first validity code can be a graphic formed by any encoding method. For example, the first validity code can be any type of Quick Response (QR) code, or two-dimensional barcode, etc.

In some embodiments, the first validity stamp or the first validity code can be used to identify the first device.

In some embodiments, the first valid identifier (e.g., the first validity stamp and/or the first validity code) is used by the first device to determine whether to send the second information.

In some embodiments, the first information is configured to indicate a first parameter that is recommended. In some embodiments, the first information can include a first parameter.

In some embodiments, a name of the first parameter is not limited, and the first parameter is, for example, a threshold value, a recommended value, or a reference value, etc. The threshold value can be a threshold value of a reference signal, etc., the recommended value can be a recommended value of a transmit power, etc., and the reference value can be a reference value of the transmit power.

In some embodiments, the first parameter is used by the first device to determine whether to send the second information.

In some embodiments, the first parameter includes one of the following: a threshold value of a reference signal, a Reference Signal Receiving Power (RSRP), a first UL transmit power, a transmit power parameter, a path loss, and a UL transmit power offset.

In some embodiments, the threshold value of the reference signal can be an RSRP threshold value.

In some embodiments, the first UL transmit power can be a transmit power recommended by the network device for the first device.

In some embodiments, the transmit power parameter can be used to determine the transmit power recommended by the network device.

In some embodiments, the UL transmit power offset is related to the type of the first device. For example, the first device can be at least one of Device A, Device B, or Device C in the previous embodiments. The UL transmit power offset corresponding to Device A is greater than the UL transmit power offset corresponding to Device B, and the UL transmit power offset corresponding to Device A is greater than the UL transmit power offset corresponding to Device C. The UL transmit power offset corresponding to Device B is the same as the UL transmit power offset corresponding to Device C, or the UL transmit power offset corresponding to Device B is greater than the UL transmit power offset corresponding to Device C. Alternatively, the first device can be at least one of Device A, Device B, or Device C in the previous embodiments, and the difference between the UL transmit power offsets corresponding to any two of Device A, Device B, and Device C is within a predetermined range.

In some embodiments, the path loss is determined based on the difference between the transmit power of the first device and the receive power of the network device.

In step S2102, the first device determines third information.

In some embodiments, the third information is used to determine whether the first device camps on the network where the network device is located.

In some embodiments, the third information is used to determine whether the first device sends the second information.

In some embodiments, a name of the third information is not limited, and the third information is, for example, identifier information, a network code, a validity stamp, or a validity code, etc.

In some embodiments, the third information includes an identifier set. In some embodiments, the identifier set includes at least one second identifier, and the second identifier is used to identify the network device. In some embodiments, the second identifier is any character, index, or number, etc.

In some embodiments, the second identifier is used by the first device to determine whether to camp on the network where the network device is located.

In some embodiments, the second identifier is determined based on a protocol agreement or pre-configuration. For example, the protocol agreement can be an agreement in a communication protocol or an agreement negotiated between the first device and the network device. For example, the first device can pre-configure the second identifier based on the network device.

In some embodiments, the third information includes a second valid identifier.

In some embodiments, the second valid identifier includes at least one of a second validity stamp or a second validity code. In some embodiments, the second valid identifier can also be a second valid tag.

In some embodiments, the second validity stamp can be any type of stamp or imprint, etc.

In some embodiments, the second validity code can be a graphic formed by any encoding method. For example, the second validity code can be any type of QR code, or two-dimensional barcode, etc.

In some embodiments, the second validity stamp or the second validity code can be used to identify the first device.

In some embodiments, the second valid identifier (e.g., the second validity stamp and/or the second validity code) is used by the first device to determine whether to send the second information.

In some embodiments, the second valid identifier is determined based on a protocol agreement or pre-configuration. For example, the protocol agreement can be an agreement in a communication protocol or an agreement negotiated between the first device and the network device. For example, the first device can be pre-configured with a second valid identifier.

In some embodiments, a group of first devices can be configured with the same second valid identifier, or first devices with the same time limit can be configured with the same second valid identifier. A group of first devices includes one or more first devices.

In some embodiments, different first devices have the same second valid identifier, or different first devices have different second valid identifiers.

In some embodiments, the third information includes a second parameter.

In some embodiments, a name of the second parameter is not limited, and the second parameter is, for example, a measured value, a power value, etc.

In some embodiments, the second parameter is used by the first device to determine whether to send the second information.

In some embodiments, the second parameter includes one of the following: a measured value of a reference signal, and a second UL transmit power. In some embodiments, the measured value of the reference signal can be an RSRP measured value.

In step S2103, the first device determines whether to camp on the network device.

In some embodiments, the first device determines, based on a second identifier and a first identifier, whether to camp on the network where the network device is located.

In some embodiments, the first device determines, based on whether the second identifier in an identifier set matches the first identifier, whether to camp on the network where the network device is located.

In some embodiments, based on that any second identifier in the identifier set matches the first identifier, the first device determines to camp on the network where the network device is located. In some embodiments, that the second identifier matches the first identifier can mean that the second identifier and the first identifier are the same.

In some embodiments, based on that any second identifier in the identifier set does not match the first identifier, the first device determines not to camp on the network where the network device is located. In some embodiments, that the second identifier does not match the first identifier can mean that the second identifier and the first identifier are different.

In some embodiments, the first information is configured for the first device to determine, based on whether the second identifier of the first device matches the first identifier, whether to camp on the network where the network device is located.

In some embodiments, the first identifier is used for one of the following: when the first device determines that any second identifier in the identifier set configured matches the first identifier, the first device camps on the network where the network device is located, and when the first device determines that any second identifier in the identifier set configured does not match the first identifier, the first device does not camp on the network where the network device is located.

In step S2104, the first device determines whether to send second information.

In some embodiments, determining whether to send the second information can involve determining whether to send the second information in response to the first signal. In some embodiments, the first device determines whether to send a second signal in response to the first signal, wherein the second signal includes the second information.

In some embodiments, a name of the second information is not limited, and the second information is, for example, reported data, etc.

In some embodiments, the second information can include at least one of the following: data from the first device, or data from a sensor bound to or associated with the first device. In some embodiments, the second information can be a random sequence used by the network device to take inventory or take missing inventory for the first device. In some embodiments, the second information can be data such as temperature, humidity, oxygen concentration, and/or noise level, etc.

In some embodiments, the first device determines, based on the second valid identifier and the first valid identifier, whether to send the second information.

In some embodiments, the first device determines, based on whether the second valid identifier of the first device matches the first valid identifier, whether to send the second information.

In some embodiments, based on that the second valid identifier matches the first valid identifier, the first device determines to send the second information. In some embodiments, that the second valid identifier matches the first valid identifier can mean that the second valid identifier and the first valid identifier are the same.

In some embodiments, based on that the second valid identifier does not match the first valid identifier, the first device determines not to send the second information. In some embodiments, that the second valid identifier does not match the first valid identifier can mean that the second valid identifier and the first valid identifier are different.

In some embodiments, the first information is configured for the first device to determine, based on whether the second valid identifier of the first device matches the first valid identifier, whether to send the second information.

In some embodiments, the first information is configured for the first device to determine to send the second information based on that the second valid identifier matches the first valid identifier; or the first information is configured for the first device to determine not to send the second information based on that the second valid identifier does not match the first valid identifier.

In some embodiments, the first information is configured for the first device to determine, based on that the second valid identifier does not match the first valid identifier, that the first device becomes invalid.

In some embodiments, the first device determines, based on a second parameter of the first device and a first parameter, whether to send the second information.

In some embodiments, based on that the second parameter of the first device is greater than or equal to the first parameter, the first device determines to send the second information; or based on that the second parameter of the first device is less than the first parameter, the first device determines not to send the second information.

In some embodiments, the first parameter is a threshold value of a reference signal, and the second parameter is a measured value of the reference signal. In some embodiments, the first parameter is an RSRP threshold value, and the second parameter is an RSRP measured value. The first device determines to send the second information if the first device determines that the RSRP measured value is greater than or equal to the RSRP threshold value; or the first device determines not to send the second information if the first device determines that the RSRP measured value is less than the RSRP threshold value.

In some embodiments, the first parameter is a first UL transmit power, and the second parameter is a second UL transmit power. The first device determines to send the second information if the first device determines that the second UL transmit power is greater than or equal to the first UL transmit power; or the second device determines not to send the second information if the first device determines that the second UL transmit power is less than the first UL transmit power.

In some embodiments, the first device determines, based on the second parameter of the first device and a third parameter, whether to send the second information, wherein the third parameter is determined based on the first parameter.

In some embodiments, based on that the second parameter of the first device is greater than or equal to the third parameter, the first device determines to send the second information; or based on that the second parameter of the first device is less than the third parameter, the first device determines not to send the second information.

In some embodiments, the third parameter is determined based on the first parameter.

In some embodiments, the second parameter is a second UL transmit power, and the third parameter is a third UL transmit power. The first parameter includes at least one of the following: a first UL transmit power, a UL transmit power parameter, a path loss, or a UL transmit power offset. In some embodiments, the third UL transmit power is determined based on at least one of the first UL transmit power, the UL transmit power parameter, the path loss, or the UL transmit power offset.

In some embodiments, the third UL transmit power is determined based on the first UL transmit power among the first parameter, and the third UL transmit power is greater than or equal to the first UL transmit power.

In some embodiments, the third UL transmit power is determined based on the UL transmit power parameter among the first parameter. For example, the first device determines a fourth UL transmit power based on the UL transmit power parameter, and the third UL transmit power is greater than or equal to the fourth transmit power.

In some embodiments, the third UL transmit power is determined based on a sum of the first UL transmit power and the path loss. For example, third UL transmit power = first UL transmit power + path loss.

In some embodiments, the third UL transmit power is determined based on the first UL transmit power, the path loss, and the UL transmit power offset. For example, third UL transmit power = first UL transmit power + path loss + UL transmit power offset.

In some embodiments, the path loss is determined based on a downlink transmit power and the RSRP measured by the first device, and the downlink transmit power is determined based on the network device.

In some embodiments, if the first UL transmit power determined by the first device is greater than or equal to the third UL transmit power, the first device determines to send the second information; or if the first UL transmit power determined by the first device is less than the third UL transmit power, the first device determines not to send the second information.

In step S2105, the first device determines that the first device becomes invalid.

In some embodiments, the first device determines, based on that the second valid identifier does not match the first valid identifier, that the first device becomes invalid.

In some embodiments, if the first device determines that the second valid identifier does not match any first valid identifier in the valid identifier set, it determines that the first device has become invalid.

In some embodiments, that the second valid identifier does not match the first valid identifier can mean that the second valid identifier and the first valid identifier are not the same.

In step S2106, the first device sends the second information to the network device.

In some embodiments, the network device receives the second information sent by the first device.

In some embodiments, based on that the second valid identifier matches the first valid identifier, the first device determines to send the second information.

In some embodiments, based on that the second parameter of the first device is greater than or equal to the first parameter, the first device determines to send the second information.

In some embodiments, based on that the second parameter of the first device is greater than or equal to the third parameter, the first device determines to send the second information.

In some embodiments, the first device sends a second signal, wherein the second signal includes the second information.

In some embodiments, the first device sends a backscatter signal, wherein the backscatter signal includes the second information.

In some embodiments, the first signal includes a first identifier. In some embodiments, the network device sends the first signal to the first device, wherein the first signal includes the first identifier, and based on that any second identifier in an identifier set configured matches the first identifier, the first device determines to camp on the network where the network device is located.

In some embodiments, the first signal includes a first valid identifier. In some embodiments, the network device sends the first signal to the first device, wherein the first signal includes the first valid identifier, and based on that the second valid identifier of the first device matches the first valid identifier, the first device sends the second information to the network device.

In some embodiments, the first signal includes a first parameter for indicating the recommendation. In some embodiments, the network device sends the first signal to the first device, wherein the first signal includes the first parameter for indicating the recommendation. The first device sends the second information to the network device based on at least one of the following: the second parameter of the first device being greater than the first parameter, the second parameter of the first device being equal to the first parameter, the second parameter of the first device being greater than the third parameter determined based on the first parameter, or the second parameter of the first device being equal to the third parameter determined based on the first parameter.

In some embodiments, a first signal includes a first identifier, and a third signal includes a first valid identifier. In some embodiments, the network device sends the first signal to the first device, wherein the first signal includes the first identifier. Based on that any second identifier in the identifier set configured matches the first identifier, the first device determines to camp on the network where the network device is located. The network device sends the third signal to the first device, wherein the third signal includes the first valid identifier. Based on that the second valid identifier of the first device matches the first valid identifier, the first device sends the second information to the network device.

In some embodiments, a first signal includes a first identifier, and a fourth signal includes a first parameter for indicating the recommendation. In some embodiments, the network device sends the first signal to the first device, wherein the first signal includes the first identifier. Based on that any second identifier in the identifier set configured matches the first identifier, the first device determines to camp on the network where the network device is located. The network device sends the fourth signal to the first device, wherein the fourth signal includes the first parameter for indicating the recommendation. The first device sends the second information to the network device based on at least one of the following: the second parameter of the first device being greater than the first parameter, the second parameter of the first device being equal to the first parameter, the second parameter of the first device being greater than the third parameter determined based on the first parameter, or the second parameter of the first device being equal to the third parameter determined based on the first parameter.

In some embodiments, the first signal, the third signal, and the fourth signal can all be trigger signals or excitation signals.

In some embodiments, the first signal is different from the third signal, or the first signal is the same as the third signal.

In some embodiments, the first signal is different from the fourth signal, or the first signal is the same as the fourth signal.

In some embodiments, "acquire", "obtain", "get", "receive", "transmit", and "send and/or receive" can be interchangeable with each other, which can be interpreted as receiving from other entities, obtaining from protocols, obtaining from self-processing, autonomous implementation, and other meanings.

In some embodiments, terms such as "send", "emit", "report", "issue", "transmit", "bidirectional transmission", "send and/or receive" can be interchangeable with each other.

In some embodiments, terms such as "specific", "predetermined", "preset", "set", "indicated", "certain", "any", "first", etc. can be interchangeable with each other. Terms such as "specific A", "predetermined A", "preset A", "set A", "indicated A", "a certain A", "any A", "first A" can be interpreted as A predetermined in the protocol or obtained through setting, configuration, or indication, or interpreted as a specific A, a certain A, any A, or the first A, etc., but not limited to this.

In some embodiments, the determination or judgment can be performed using a value represented by one bit (0 or 1), or by a true/false value (Boolean value), or by a numerical comparison (e.g., a comparison with a predetermined value), but are not limited to this.

In some embodiments, "not expecting to receive" can be interpreted as not receiving over time-domain resources and/or frequency-domain resources, or interpreted as not performing subsequent processing on the received data, etc., and "not expecting to send" can be interpreted as not sending, or interpreted as sent but not expecting a response from the receiver.

The information processing method involved in the embodiments of the present disclosure can include at least one of steps S2101 to S2106. For example, step S2103 can be implemented as an independent embodiment, step S2104 can be implemented as an independent embodiment, step S2105 can be implemented as an independent embodiment, a combination of steps S2104 and S2105 can be implemented as an independent embodiment, a combination of steps S2104 and S2106 can be implemented as an independent embodiment, a combination of steps S2104, S2105, and S2106 can be implemented as an independent embodiment, a combination of steps S2101, S2102, and S2103 can be implemented as an independent embodiment, a combination of steps S2101, S2102, and S2104 can be implemented as an independent embodiment, a combination of steps S2101, S2102, and S2105 can be implemented as an independent embodiment, a combination of steps S2101, S2102, and S2106 can be implemented as an independent embodiment, a combination of steps S2101, S2102, S2103, and S2104 can be implemented as an independent embodiment, a combination of steps S2101, S2102, S2103, and S2105 can be implemented as an independent embodiment, and a combination of steps S2101 to S2106 can be implemented as an independent embodiment.

In some embodiments, steps S2101 and S2102 can be interchanged or performed simultaneously, and steps S2104 and S2105 can be interchanged or performed simultaneously.

In some embodiments, steps S2101, S2102, S2104, S2105, and S2106 can be optional, and one or more of these steps can be omitted or substituted in different embodiments.

In some embodiments, steps S2101, S2102, S2103, S2105, and S2106 can be optional, and one or more of these steps can be omitted or substituted in different embodiments.

In some embodiments, steps S2101, S2102, S2103, S2104, and S2106 can be optional, and one or more of these steps can be omitted or substituted in different embodiments.

In some embodiments, steps S2101, S2102, and S2105 can be optional, and one or more of these steps can be omitted or substituted in different embodiments.

In some embodiments, reference can be made to other optional implementations described before or after the specification corresponding to FIG. 2.

FIG. 3A is a schematic flowchart of an information processing method according to embodiments of the present disclosure. As shown in FIG. 3A, the embodiments of the present disclosure relate to an information processing method. The method is performed by a first device. The method includes following steps.

In step S3101, obtaining a first signal.

Optional implementations of step S3101 can be found in the optional implementations of step S2101 in FIG. 2 and other related parts in the embodiments involved in FIG. 2, which will not be repeated here.

In some embodiments, the first device receives a first signal sent by a network device, but is not limited to this. The first device can also receive a first signal sent by other entities.

In some embodiments, the first device obtains the first signal specified by a protocol.

In some embodiments, the first device obtains the first signal from the upper layer(s).

In some embodiments, the first device obtains the first signal through processing.

In some embodiments, step S3101 is omitted, and the first device autonomously realizes the function indicated by the first signal, or the above function is defaulted or set by default.

In some embodiments, the first signal can be one single signal, which includes at least one of a first identifier, a first valid identifier, or a first parameter configured for indicating the recommendation.

In some embodiments, the first signal can be two signals, where the 1^{st} first signal includes a first identifier, and the 2^{nd} first signal includes at least one of a first valid identifier or a first parameter. For example, when the 2^{nd} first signal includes the first valid identifier, or when the 2^{nd} first signal includes both the first valid identifier and the first parameter, it is the third signal in the previous embodiments. For example, when the 2^{nd} first signal includes the first parameter, it is the fourth signal in the previous embodiments.

In some embodiments, the first signal can be two signals. The 1^{st} first signal includes at least one of a first identifier or a first valid identifier, and the 2^{nd} first signal includes the first parameter. For example, when the 1^{st} first signal includes the first identifier, or when the 1^{st} first signal includes both the first identifier and the first valid identifier, it is the first signal in the previous embodiments. For example, when the 2^{nd} first signal includes the first parameter, it is the fourth signal in the previous embodiments.

In some embodiments, the first signal can be three signals. The 1^{st} first signal includes the first identifier, the 2^{nd} first signal includes the first valid identifier, and the 3^{rd} first signal includes the first parameter. When the 1^{st} first signal includes the first identifier, it is the first signal in the previous embodiments. When the 2^{nd} first signal includes the first valid identifier, it is the third signal in the previous embodiments. When the 3^{rd} first signal includes the first parameter, it is the fourth signal in the previous embodiments.

In step S3102, determining third information.

Optional implementations of step S3102 can be found in the optional implementations of step S2102 in FIG. 2 and other related parts in the embodiments involved in FIG. 2, which will not be repeated here.

In some embodiments, the third information and the first information are used by the first device to determine whether to camp on the network where the network device is located.

In some embodiments, the third information and the first information are used by the first device to determine whether to send the second information.

In step S3103, determining whether to camp on the network device.

Optional implementations of step S3103 can be found in the optional implementations of step S2103 in FIG. 2 and other related parts in the embodiments involved in FIG. 2, which will not be repeated here.

In step S3104, determining whether to send second information.

Optional implementations of step S3104 can be found in the optional implementations of step S2104 in FIG. 2 and other related parts in the embodiments involved in FIG. 2, which will not be repeated here.

In step S3105, determining that the first device becomes invalid.

Optional implementations of step S3105 can be found in the optional implementations of step S2105 in FIG. 2 and other related parts in the embodiments involved in FIG. 2, which will not be repeated here.

In step S3106, sending second information.

Optional implementations of step S3106 can be found in the optional implementations of step S2106 in FIG. 2, and other related parts in the embodiments involved in FIG. 2, which will not be repeated here.

In some embodiments, the first device sends the second information to the network device, but is not limited to this. The second information can also be sent to other entities.

The information processing method involved in the embodiments of the present disclosure can include at least one of steps S3101 to S3106. For example, step S3103 can be implemented as an independent embodiment, step S3104 can be implemented as an independent embodiment, step S3105 can be implemented as an independent embodiment, a combination of steps S3104 and S3105 can be implemented as an independent embodiment, a combination of steps S3104 and S3106 can be implemented as an independent embodiment, a combination of steps S3104, S3105, and S3106 can be implemented as an independent embodiment, a combination of steps S3101, S3102, and S3103 can be implemented as an independent embodiment, a combination of steps S3101, S3102, and S3104 can be implemented as an independent embodiment, a combination of steps S3101, S3102, and S3105 can be implemented as an independent embodiment, a combination of steps S3101, S3102, and S3106 can be implemented as an independent embodiment, a combination of steps S3101, S3102, S3103, and S3104 can be implemented as an independent embodiment, a combination of steps S3101, S3102, S3103, and S3105 can be implemented as an independent embodiment, a combination of steps S3101, S3102, S3103, S3104, and S3106 can be implemented as an independent embodiment, and a combination of steps S3101 to S3106 can be implemented as an independent embodiment.

In some embodiments, steps S3101 and S3102 can be interchanged or performed simultaneously, and steps S3104 and S3105 can be interchanged or performed simultaneously.

In some embodiments, steps S3101, S3102, S3104, S3105, and S3106 can be optional, and one or more of these steps can be omitted or substituted in different embodiments.

In some embodiments, steps S3101, S3102, S3103, S3105, and S3106 can be optional, and one or more of these steps can be omitted or substituted in different embodiments.

In some embodiments, steps S3101, S3102, and S3105 can be optional, and one or more of these steps can be omitted or substituted in different embodiments.

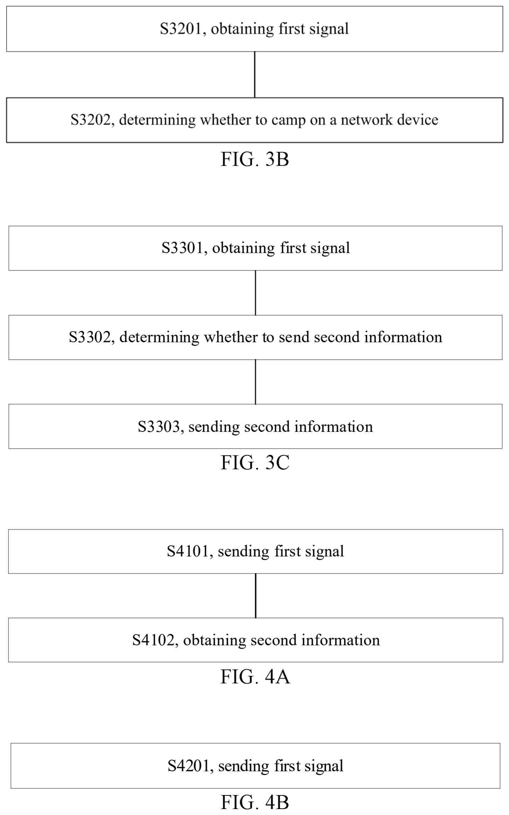

FIG. 3B is a schematic flowchart of an information processing method according to embodiments of the present disclosure. As shown in FIG. 3B, the embodiments of the present disclosure relate to an information processing method. The method is performed by a first device. The method includes following steps.

In step S3201, obtaining a first signal.

Optional implementations of step S3201 can be found in the optional implementations of step S2101 in FIG. 2, or step S3101 in FIG. 3A, and other related parts in the embodiments involved in FIGS. 2 and 3A, which will not be repeated here.

In step S3202, determining whether to camp on the network device.

Optional implementations of step S3202 can be found in the optional implementations of step S2103 in FIG. 2, or step S3103 in FIG. 3A, and other related parts in the embodiments involved in FIGS. 2 and 3A, which will not be repeated here.

In some embodiments, the first signal includes first information, wherein the first information is used to determine whether to camp on the network where the network device is located, and/or the first information is used to determine whether to send the second information.

In some embodiments, determining whether to camp on the network device includes: determining, based on the first information, whether to camp on the network device.

In some embodiments, the first device receives a first signal, wherein the first signal includes first information, and determining the first operation based on the first information includes at least one of the following: whether to camp on the network where the network device is located, or whether to send the second information.

In some embodiments, the first information includes a valid identifier set, the valid identifier set includes at least one first valid identifier, and determining the first operation based on the first information includes: determining, based on whether a second valid identifier of the first device matches the first valid identifier, whether to send the second information.

In some embodiments, determining, based on whether a second valid identifier of the first device matches the first valid identifier, whether to send the second information includes one of the following:
based on that the second valid identifier matches the first valid identifier, determining to send the second information; and
based on that the second valid identifier does not match the first valid identifier, determining not to send the second information.

In some embodiments, the method further includes: determining, based on that the second valid identifier does not match the first valid identifier, that the first device becomes invalid.

In some embodiments, the first valid identifier includes at least one of a first validity stamp or a first validity code; and/or, the second valid identifier includes at least one of a second validity stamp or a second validity code.

In some embodiments, the first information includes a first identifier, the first identifier is used to identify a network device, and determining the first operation based on the first information includes one of the following:
based on that any second identifier in an identifier set configured matches the first identifier, determining to camp on the network where the network device is located; and
based on that any second identifier does not match the first identifier, determining not to camp on the network where the network device is located.

In some embodiments, the first information is configured to indicate a first parameter that is recommended, and determining the first operation based on the first information includes one of the following:
determining, based on a second parameter of the first device and the first parameter, whether to send the second information; and
determining, based on the second parameter of the first device and a third parameter, whether to send the second information, wherein the third parameter is determined based on the first parameter.

In some embodiments, determining, based on the second parameter of the first device and the first parameter, whether to send the second information, includes one of the following:
based on that the second parameter of the first device is greater than or equal to the first parameter, determining to send the second information; and
based on that the second parameter of the first device is less than the first parameter, determining not to send the second information, wherein the first parameter is a threshold value of a reference signal, and the second parameter is a measured value of the reference signal; or the first parameter is a first UL transmit power, and the second parameter is a second UL transmit power.

In some embodiments, determining, based on the second parameter of the first device and the third parameter, whether to send the second information, includes one of the following:
based on that the second parameter of the first device is greater than or equal to the third parameter, determining to send the second information; and
based on that the second parameter of the first device is less than the third parameter, determining not to send the second information, wherein the second parameter is a second UL transmit power, the third parameter is a third UL transmit power, and the first parameter includes at least one of the following: a first UL transmit power, a UL transmit power parameter, a path loss, or a UL transmit power offset.

In some embodiments, the network device includes one of the following: a base station, a relay, an IAB, a UE, and a repeater.

The above embodiments can be implemented individually or in combination. Optional implementations can be found in the optional implementations of the steps in FIGS. 2 and 3A, which will not be repeated here.

FIG. 3C is a schematic flowchart of an information processing method according to embodiments of the present disclosure. As shown in FIG. 3C, the embodiments of the present disclosure relate to an information processing method. The method is performed by a first device. The method includes following steps.

In step S3301, obtaining a first signal.

Optional implementations of step S3301 can be found in the optional implementations of step S2101 in FIG. 2, or step S3101 in FIG. 3A, and other related parts in the embodiments involved in FIGS. 2 and 3A, which will not be repeated here.

In step S3302, determining whether to send second information.

Optional implementations of step S3302 can be found in the optional implementations of step S2104 in FIG. 2, or step S3104 in FIG. 3A, and other related parts in the embodiments involved in FIGS. 2 and 3A, which will not be repeated here.

In step S3303: sending the second information.

Optional implementations of step S3303 can be found in the optional implementations of step S2106 in FIG. 2, or step S3106 in FIG. 3A, and other related parts in the embodiments involved in FIGS. 2 and 3A, which will not be repeated here.

The above embodiments can be implemented individually or in combination. Optional implementations can be found in the optional implementations of the steps in FIGS. 2 and 3A, which will not be repeated here.

FIG. 4A is a schematic flowchart of an information processing method according to embodiments of the present disclosure. As shown in FIG. 4A, the embodiments of the disclosure relate to an information processing method. The method is performed by a network device. The method includes following steps.

In step S4101, sending a first signal.

Optional implementations of step S4101 can be found in the optional implementations of steps S2104, S2106, and S2109 in FIG. 2, and other related parts in the embodiments involved in FIG. 2, which will not be repeated here.

In some embodiments, the first signal includes at least one of a first identifier, a first valid identifier, or a first parameter.

In some embodiments, the first identifier is used by the first device to determine whether to camp on the network where the network device is located.

In some embodiments, the first valid identifier is used by the first device to determine whether to send the second information.

In some embodiments, the first parameter is used by the first device to determine whether to send the second information.

In some embodiments, the network device sends the first signal to the first device, but is not limited to this. The network device can also send the first signal to other entities.

In step S4102, obtaining second information.

Optional implementations of step S4102 can be found in the optional implementations of step S2107 in FIG. 2, and other related parts in the embodiments involved in FIG. 2, which will not be repeated here.

In some embodiments, the second information is included in the second signal. For example, the second signal is a backscatter signal.

In some embodiments, the network device receives the second information sent by the first device, but is not limited to this. The network device can also receive second information sent by other entities.

In some embodiments, the network device obtains the second information specified by a protocol.

In some embodiments, the network device obtains the second information from the upper layer(s).

In some embodiments, the network device obtains the second information through processing.

In some embodiments, step S4101 is omitted, and the network device autonomously realizes the function indicated by the second information, or the above function is defaulted or set by default.

The information processing method involved in the embodiments of the present disclosure can include at least one of steps S4101 and S4102. For example, step S4101 can be implemented as an independent embodiment, and a combination of steps S4101 and S4102 can be implemented as an independent embodiment.

In some embodiments, step S4102 can be optional, and one or more of these steps can be omitted or substituted in different embodiments.

FIG. 4B is a schematic flowchart of an information processing method according to embodiments of the present disclosure. As shown in FIG. 4B, the embodiments of the present disclosure relate to an information processing method. The method is performed by a network device. The method includes following steps.

In step S4201, sending a first signal.

Optional implementations of step S4201 can be found in the optional implementations of step S2104 in FIG. 2, or step S4101 in FIG. 4A, and other related parts in the embodiments involved in FIGS. 2 and 4A, which will not be repeated here.

In some embodiments, the first signal includes first information configured for the first device to determine a first operation, and the first operation includes: whether to camp on a network where the network device is located, or whether to send second information.

In some embodiments, the first information includes a valid identifier set, the valid identifier set includes at least one first valid identifier, and the first information is configured for the first device to determine, based on whether a second valid identifier of the first device matches the first valid identifier, whether to send the second information.

In some embodiments, the first information is configured for the first device to determine, based on that the second valid identifier matches the first valid identifier, to send the second information; or the first information is configured for the first device to determine, based on that the second valid identifier does not match the first valid identifier, not to send the second information.

In some embodiments, the first information is further configured for the first device to determine, based on that the second valid identifier does not match the first valid identifier, that the first device becomes invalid.

In some embodiments, the first valid identifier includes at least one of a first validity stamp or a first validity code; and/or, the second valid identifier includes at least one of a second validity stamp or a second validity code.

In some embodiments, the first information includes a first identifier used to identify a network device, and the first identifier is used for one of the following:
the first device determines to camp on the network where the network device is located when determining that any second identifier in an identifier set configured matches the first identifier; and
the first device determines not to camp on the network where the network device is located when determining that any second identifier in the identifier set configured does not match the first identifier.

In some embodiments, the first information is used to indicate a first parameter that is recommended, and the first parameter is used for one of the following:
based on that the second parameter of the first device is greater than or equal to the first parameter, the first device determines to send the second information;
based on that the second parameter of the first device is less than the first parameter, the first device determines not to send the second information;
based on that the second parameter of the first device is greater than or equal to a third parameter, the first device determines to send the second information, wherein the third parameter is determined based on the first parameter; and
based on that the second parameter of the first device is less than the third parameter, the first device determines not to send the second information.

In some embodiments, the first parameter is a threshold value of a reference signal, and the second parameter is a measured value of the reference signal; or the first parameter is a first UL transmit power, and the second parameter is a second UL transmit power.

In some embodiments, the second parameter is a second UL transmit power, the third parameter is a third UL transmit power, and the first parameter includes at least one of the following: a first UL transmit power, a UL transmit power parameter, a path loss, or a UL transmit power offset.

In some embodiments, the network device includes one of the following: a base station, a relay, an IAB, a UE, and a repeater.

The above embodiments can be implemented individually or in combination. Optional implementations can be found in the optional implementations of the steps in FIGS. 2 and 4A, which will not be repeated here.

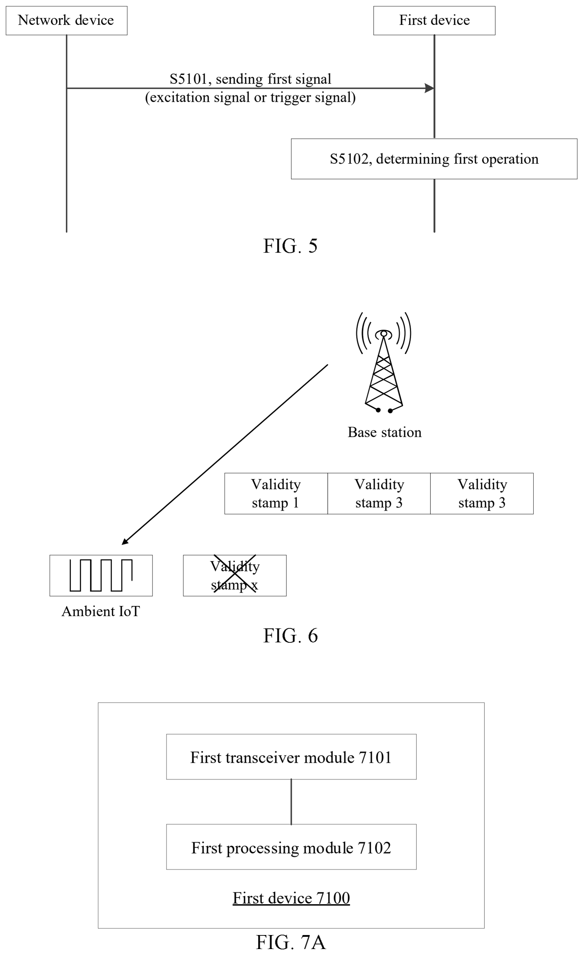

FIG. 5 is a schematic flowchart of an information processing method according to embodiments of the present disclosure. As shown in FIG. 5, the embodiments of the present disclosure relate to an information processing method for a communication system. The method includes following steps.

In step S5101, a network device sends a first signal to a first device.

In some embodiments, the first signal includes first information.

Optional implementations of step S5101 can be found in the optional implementations of step S2101 in FIG. 2, step S3101 in FIG. 3A, and step S4101 in FIG. 4A, as well as other related parts in the embodiments involved in FIGS. 2, 3A, and 4A, which will not be repeated here.

In step S5102, the first device determines a first operation.

In some embodiments, the first device determines the first operation based on the first information. In some embodiments, the first operation includes at least one of the following: whether to camp on the network where the network device is located, or whether to send the second information to the network device.

Optional implementations of step S5102 can be found in the optional implementations of steps S2103 and S2104 in FIG. 2, steps S3103 and S3104 in FIG. 3A, and other related parts in the embodiments involved in FIGS. 2 and 3A, which will not be repeated here.

In some embodiments, the above method can include the methods described in the embodiments of the information processing system 100 side, the first device side, the network device side, etc., and will not be repeated here.

Embodiments of the present disclosure relate to an information processing method.

In the following embodiments, the base station can be replaced by a relay, an IAB, a UE, or a repeater. In some embodiments, the base station, the relay, the IAB, the UE, or the repeater can be the network device in the previous embodiments.

Step S6101: network identification and valid camping.

In some embodiments, after obtaining energy, the ambient IoT can retrieve the network to obtain basic network information. The basic network information includes at least one network code identifying the network side. The ambient IoT can pre-configure at least one network code. After obtaining the network code of the current network, the ambient IoT compares whether the network code is one of the network codes pre-configured by the ambient IoT. If the network code is one of the network codes pre-configured by the ambient IoT, it is initially considered that the ambient IoT can camp on the network, and receives a trigger signal or an excitation signal.

In some embodiments, the ambient IoT is the first device in the previous embodiments, the basic network information is the first information including the first identifier in the previous embodiments, the network code is the first identifier in the previous embodiments, and the trigger signal or excitation signal is the first signal, the third signal, or the fourth signal in the previous embodiments.

Step S6102: the ambient IoT is filtered based on a validity stamp or a valid tag.

In some embodiments, the valid tag can be either the first valid identifier or the second valid identifier in the previous embodiments.

In some embodiments, the ambient IoT is pre-configured with a validity stamp or a validity code. A batch of ambient IoTs or ambient IoTs with the same time limit are pre-configured with the same validity stamp or validity code.

In some embodiments, when the base station sends a trigger signal or an excitation signal, the trigger signal or the excitation signal carries at least one validity stamp or validity code, i.e., a list of validity stamps or validity codes.

In some embodiments, if the validity stamp or validity code of the ambient IoT exists in the list, the ambient IoT responds by further determining whether the trigger signal or excitation signal is requesting its data reporting. That is, the determination is performed based on the relevant identifier of the ambient IoT.

In some embodiments, if the validity stamp or validity code of the ambient IoT does not exist in the list, the ambient IoT does not respond to the trigger signal or the excitation signal, even if the relevant identifier of the ambient IoT is within a target range of the data request. In some embodiments, the ambient IoT can determines that the ambient IoT itself has become invalid and locally end its lifecycle.

For example, as shown in FIG. 6, the validity stamp included in the trigger signal or the excitation signal sent by the base station can be validity stamp 1, validity stamp 2, and validity stamp 3, the validity stamp configured by the ambient IoT is validity stamp x, then the ambient IoT determines not to respond to the trigger signal or the excitation signal.

In some embodiments, the validity stamp or validity code sent by the base station can be the first validity stamp or the first validity code in the previous embodiments, the validity stamp or validity code of the ambient IoT can be the second validity stamp or the second validity code in the previous embodiments, the trigger signal or the excitation signal can be the first signal or the fourth signal in the previous embodiments, and the data reported by the ambient IoT can be the second information in the previous embodiments.

Step S6103: the ambient IoT is filtered based on RSRP.

In some embodiments, due to the limited UL coverage, an assisting node or an intermediate node may exist to assist uplink and/or downlink transmission. The UL coverage varies depending on the scenario. Therefore, the network side can configure a measurement threshold, such as an RSRP threshold, to limit the minimum threshold for the ambient IoT to respond the trigger signal or excitation signal. Whether there are assisting nodes or whether the ambient IoT communicates directly with the base station is transparent to the ambient IoT. If there are assisting nodes, a measurement threshold, such as the RSRP threshold, can be set on the network side. Only when a measurement result from the ambient IoT is higher than the threshold can ensure that the uplink coverage is problem-free, and the network side can receive the backscatter data. In some embodiments, the network side can also indicate a recommended UL reflection power value or a recommended UL reflection power parameter, which is used to calculate the uplink transmit power. For example, if the network also configures the transmit power of the base station, the ambient IoT can calculate the path loss, i.e., "PL = UL transmit power - RSRP", and the UL transmit power is "PL + UL reflection power parameter". Further, the network side can also configure a power parameter related to the type of the ambient IoT. In this case, the UL transmit power is "PL + UL reflection power parameter + power parameter related to the type of the ambient IoT".

In some embodiments, if the UL transmit power can reach the value recommended by the network side, or the UL transmit power value calculated above, the network side can receive the backscatter signal; otherwise, the network side cannot receive the backscatter signal. If the network side cannot receive the backscatter signal, the ambient IoT can choose not to perform the backscattering.

In some embodiments, the trigger signal or the excitation signal can be either the first signal or the fourth signal in the previous embodiments, the RSRP threshold can be the RSRP threshold value in the previous embodiments, the measurement result from the ambient IoT can be the RSRP measured value in the previous embodiments, the recommended UL reflection power value can be the first UL transmit power in the previous embodiments, the recommended UL reflection power parameter can be the UL transmit power parameter in the previous embodiments, the UL transmit power can be the third UL transmit power in the previous embodiments, and the power parameter related to the type of the ambient IoT can be the UL transmit power offset in the previous embodiments.

The information processing method involved in the embodiments of the present disclosure can include at least one of steps S6101 to S6103. For example, step S6101 can be implemented as an independent embodiment, step S6102 can be implemented as an independent embodiment, step S6103 can be implemented as an independent embodiment, a combination of steps S6101 and S6102 can be implemented as an independent embodiment, a combination of steps S6101 and S6103 can be implemented as an independent embodiment, a combination of steps S6102 and S6103 can be implemented as an independent embodiment, and a combination of steps S6101, S6102, and S6103 can be implemented as an independent embodiment.

In some embodiments, steps S6101 and S6102 can be optional, and one or more of these steps can be omitted or substituted in different embodiments.

In some embodiments, steps S6101 and S6103 can be optional, and one or more of these steps can be omitted or substituted in different embodiments.

In some embodiments, steps S6102 and S6103 can be optional, and one or more of these steps can be omitted or substituted in different embodiments.

In embodiments of the present disclosure, some or all steps, and their optional implementations, can be arbitrarily combined with some or all steps in other embodiments, or arbitrarily combined with optional implementations in other embodiments.

Embodiments of the present disclosure also provide a device for implementing any of the above methods. For example, a device is provided, which includes units or modules for implementing the steps performed by the terminal in any of the above methods. In addition, another device is provided, including units or modules for implementing the steps performed by the network device (e.g., access network device, core network functional node, core network device, etc.) in any of the above methods.

It should be understood that the division of the units in the above device is only a logical functional division. In actual implementations, they can be fully or partially integrated into a single physical entity, or they can be physically separated. In addition, the units in the device can be implemented by a processor calling software. For example, the device includes a processor connected to a memory containing computer instructions. The processor calls the computer instructions stored in the memory to implement any of the above methods or to implement the functions of the units in the above device. The processor can be, for example, a general-purpose processor, such as a central processing unit (CPU) or a microprocessor, and the memory can be internal or external to the device. Alternatively, the units in the device can be implemented as hardware circuits. The functions of some or all units can be achieved through the design of these hardware circuits, which can be understood as one or more processors. For example, in one implementation, the hardware circuit is an application-specific integrated circuit (ASIC). The functions of some or all of the units are achieved through the design of the logical relationships between the components within the circuit. In another implementation, the hardware circuit can be implemented using a programmable logic device (PLD). Taking a Field Programmable Gate Array (FPGA) as an example, it can include a large number of logic gates. The connection relationships between the logic gates are configured through a configuration file, thereby achieving the functions of some or all of the units. All units of the above device can be implemented entirely through processor-called software, entirely through hardware circuits, or partially through processor-called software with the remaining parts implemented through hardware circuits.

In the present disclosure, the processor is a circuit with signal processing capabilities. In one implementation, the processor can be a circuit with instruction read and execute capabilities, such as a central processing unit (CPU), microprocessor, graphics processing unit (GPU) (which can be understood as a type of microprocessor), or digital signal processor (DSP). In another implementation, the processor can implement certain functions through the logical relationships of hardware circuits. These logical relationships are fixed or reconfigurable. For example, the processor is a hardware circuit implemented using an application-specific integrated circuit (ASIC) or a programmable logic device (PLD), such as an FPGA. In a reconfigurable hardware circuit, the process of the processor loading a configuration document and configuring the hardware circuit can be understood as the processor loading instructions to implement the functions of some or all of the above units. In addition, it can also be a hardware circuit designed for artificial intelligence, which can be understood as an ASIC, such as a neural network processing unit (NPU), tensor processing unit (TPU), or deep learning processing unit (DPU).

FIG. 7A is a schematic diagram of a structure of a first device according to embodiments of the present disclosure. As shown in FIG. 7A, the first device 7100 includes at least one of a first transceiver module 7101 or a first processing module 7102. In some embodiments, the first transceiver module 7101 is configured to receive a first signal, wherein the first signal includes first information. The first processing module 7102 is configured to determine a first operation based on the first information. In some embodiments, the first transceiver module 7101 is configured to perform at least one of sending and/or receiving steps (e.g., steps S2101 and/or S2106, but not limited to this) performed by the first device in any of the above methods, which will not be described in detail here. In some embodiments, the first processing module 7102 is configured to perform at least one of processing steps (e.g., steps S2102, S2103, S2104 and/or S2105, but not limited to this) performed by the first device in any of the above methods, which will not be described in detail here.

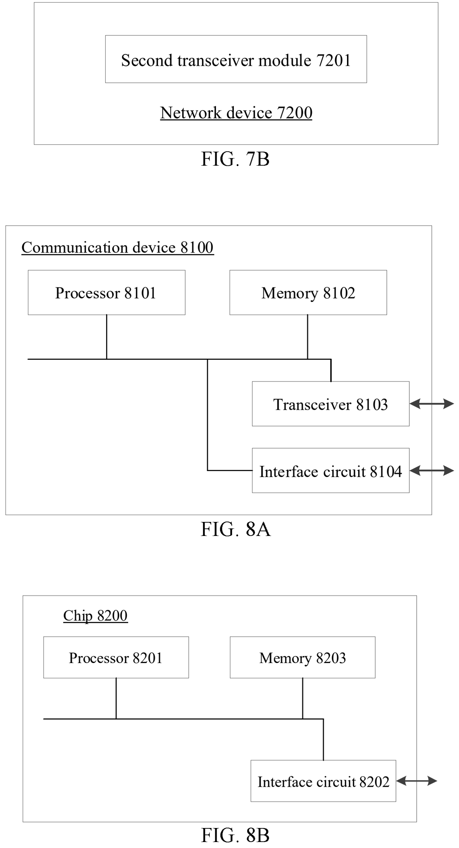

FIG. 7B is a schematic diagram of a structure of a network device according to embodiments of the present disclosure. As shown in FIG. 7B, the network device 7200 includes a second transceiver module 7201. In some embodiments, the second transceiver module 7201 is configured to send a first signal. In some embodiments, the second transceiver module 7201 is configured to perform at least one of sending and/or receiving steps (e.g., steps S2101 and/or S2106, but not limited to this) performed by the network device in any of the above methods, which will not be described in detail here.

FIG. 8A is a schematic diagram of a structure of a communication device 8100 according to embodiments of the present disclosure. The communication device 8100 can be a network device (e.g., an access network device, a core network device, or a terminal, etc.), a first device (e.g., an ambient IoT device, or a terminal, etc.), a chip, a chip system, or a processor that supports the network device in implementing any of the above methods, or a chip, a chip system, or a processor that supports the terminal in implementing any of the above methods. The communication device 8100 can be configured to implement the methods described in the above method embodiments, and specific details can be found in the descriptions in the above method embodiments.

As shown in FIG. 8A, the communication device 8100 includes one or more processors 8101. The processor 8101 can be a general-purpose processor or an application-specific processor, such as a baseband processor or a central processing unit (CPU). The baseband processor can be used to process communication protocols and communication data, while the CPU can be used to control the communication device (e.g., base station, baseband chip, terminal device, terminal device chip, DU or CU, etc.), execute programs, and process program data. The processor 8101 is configured to call instructions to cause the communication device 8100 to perform any of the above methods.

In some embodiments, the communication device 8100 further includes one or more memories 8102 for storing instructions. In some embodiments, all or part of the memories 8102 can be located outside the communication device 8100.

In some embodiments, the communication device 8100 further includes one or more transceivers 8103. When the communication device 8100 includes one or more transceivers 8103, at least one of the communication steps such as transmitting and receiving in the above methods (e.g., at least one of steps S2101 to S2106, but not limited to this) are performed by the transceiver 8103, and at least one of other steps (e.g., at least one of steps S2101 to S2106, but not limited to this) are performed by the processor 8101.

In some embodiments, the transceiver can include a receiver and a transmitter, which can be separated or integrated. In some embodiments, terms such as "transceiver", "transceiver unit", "transceiver machine", "transceiver circuit", etc., can be used interchangeably. Terms such as "transmitter", "transmitting unit", "transmitting machine", "transmitting circuit", etc., can be used interchangeably. Terms such as "receiver", "receiving unit", "receiving machine", "receiving circuit", etc., can be used interchangeably.

In some embodiments, the communication device 8100 further includes one or more interface circuits 8104. The interface circuits 8104 are connected to the memory 8102 and can be used to receive signals from the memory 8102 or other devices, and to send signals to the memory 8102 or other devices. For example, the interface circuit 8104 can read instructions stored in the memory 8102 and send those instructions to the processor 8101.

The communication device 8100 described in the above embodiments can be a network device or a first device, but the scope of the communication device 8100 described in the present disclosure is not limited to this, and the structure of the communication device 8100 is not limited to FIG. 8A. The communication device can be a standalone device or part of a large device. For example, the communication device can be: (1) a standalone integrated circuit (IC), a chip, a chip system, or a subsystem; (2) a collection of one or more ICs, optionally, including storage components for storing data and programs; (3) an ASIC, such as a modem; (4) a module that can be embedded in other devices; (5) a receiver, a terminal device, a smart terminal device, a cellular phone, a wireless device, a handheld device, a mobile unit, a vehiclemounted device, a network device, a cloud device, an artificial intelligence device, etc., and (6) other devices, etc.

FIG. 8B is a schematic diagram of a structure of a chip 8200 according to embodiments of the present disclosure. For cases where the communication device 8100 can be a chip or a chip system, the reference can be made to the schematic diagram of the structure of the chip 8200 shown in FIG. 8B, but it is not limited to this.

The chip 8200 includes one or more processors 8201, which are configured to perform any of the methods described above.

In some embodiments, the chip 8200 further includes one or more interface circuits 8202 connected to the memory 8203. The interface circuits 8202 can be used to receive signals from the memory 8203 or other devices, and can also be used to send signals to the memory 8203 or other devices. For example, the interface circuit 8202 can read instructions stored in the memory 8203 and send those instructions to the processor 8201.

In some embodiments, the interface circuit 8202 is configured to perform at least one of the communication steps such as transmitting and receiving in the above methods (e.g., at least one of steps S2101 to S2106, but not limited to this), and the processor 8201 is configured to perform at least one of other steps (e.g., at least one of steps S2101 to S2106, but not limited to this).

In some embodiments, terms such as "interface circuit", "interface", "transceiver pin", "transceiver", etc., can be used interchangeably.

In some embodiments, the chip 8200 further includes one or more memories 8203 for storing instructions. In some embodiments, all or part of the memories 8203 can be located outside the chip 8200.

The present disclosure also provides a storage medium storing instructions. When the instructions are executed on the communication device 8100, the communication device 8100 is caused to perform any of the above methods. In some embodiments, the storage medium is an electronic storage medium. In some embodiments, the storage medium is a computerreadable storage medium, but is not limited to this. The storage medium can also be a storage medium readable by other devices. In some embodiments, the above storage medium can be a non-transitory storage medium, but is not limited to this. The storage medium can also be a temporary storage medium.

The present disclosure also provides a program product. When the program product is executed by the communication device 8100, the communication device 8100 is caused to perform any of the above methods. In some embodiments, the above program product is a computer program product.

The present disclosure also provides a computer program. When the computer program runs on a computer, the computer is caused to perform any of the above methods.

## Claims

1. An information processing method, comprising:
receiving, by a first device, a first signal, wherein the first signal comprises first information; and
determining a first operation based on the first information, wherein the first operation comprises at least one of:
whether to camp on a network where a network device is located; or
whether to send second information.

2. The method according to claim 1, wherein the first information comprises a valid identifier set, the valid identifier set comprises at least one first valid identifier, and determining the first operation based on the first information comprises:
determining, based on whether a second valid identifier of the first device matches the first valid identifier, whether to send the second information.

3. The method according to claim 2, wherein determining, based on whether the second valid identifier of the first device matches the first valid identifier, whether to send the second information comprises one of:
based on that the second valid identifier matches the first valid identifier, determining to send the second information; and
based on that the second valid identifier does not match the first valid identifier, determining not to send the second information.

4. The method according to claim 3, further comprising:
based on that the second valid identifier does not match the first valid identifier, determining that the first device becomes invalid.

5. The method according to any of claims 2 to 4, wherein
the first valid identifier comprises at least one of a first validity stamp or a first validity code;
and/or
the second valid identifier comprises at least one of a second validity stamp or a second validity code.

6. The method according to any of claims 1 to 5, wherein the first information comprises a first identifier configured to identify the network device, and determining the first operation based on the first information comprises one of:
based on that any second identifier in an identifier set configured matches the first identifier, determining to camp on the network where the network device is located; and
based on that any second identifier does not match the first identifier, determining not to camp on the network where the network device is located.

7. The method according to any of claims 1 to 6, wherein the first information is configured to indicate a first parameter that is recommended, and determining the first operation based on the first information comprises one of:
based on a second parameter of the first device and the first parameter, determining whether to send the second information; and
based on the second parameter of the first device and a third parameter, determining whether to send the second information, wherein the third parameter is determined based on the first parameter.

8. The method according to claim 7, wherein based on the second parameter of the first device and the first parameter, determining whether to send the second information comprises one of:
based on that the second parameter of the first device is greater than or equal to the first parameter, determining to send the second information; and
based on that the second parameter of the first device is less than the first parameter, determining not to send the second information;
wherein the first parameter is a threshold value of a reference signal, and the second parameter is a measured value of the reference signal; or the first parameter is a first UL transmit power, and the second parameter is a second UL transmit power.

9. The method according to claim 7, wherein based on the second parameter of the first device and the third parameter, determining whether to send the second information comprises one of:
based on that the second parameter of the first device is greater than or equal to the third parameter, determining to send the second information; and
based on that the second parameter of the first device is less than the third parameter, determining not to send the second information;
wherein the second parameter is a second UL transmit power, the third parameter is a third UL transmit power, and the first parameter comprises at least one of a first UL transmit power, a UL transmit power parameter, a path loss, or a UL transmit power offset.

10. The method according to any of claims 1 to 9, wherein the network device comprises one of a base station, a relay, an Integrated Access Backhaul (IAB), a user equipment (UE), and a repeater.

11. An information processing method, comprising:
sending, by a network device, a first signal, wherein the first signal comprises first information configured for a first device to determine a first operation, and the first operation comprises at least one of:
whether to camp on a network where the network device is located; or
whether to send second information.

12. The method according to claim 11, wherein the first information comprises a valid identifier set, and the valid identifier set comprises at least one first valid identifier, and wherein the first information is configured for the first device to determine, based on whether a second valid identifier of the first device matches the first valid identifier, whether to send the second information.

13. The method according to claim 12, wherein
the first information is configured for the first device to determine to send the second information based on that the second valid identifier matches the first valid identifier;
or
the first information is configured for the first device to determine not to send the second information based on that the second valid identifier does not match the first valid identifier.

14. The method according to claim 13, wherein the first information is further configured for the first device to determine that the first device becomes invalid based on that the second valid identifier does not match the first valid identifier.

15. The method according to any of claims 12 to 14, wherein
the first valid identifier comprises at least one of a first validity stamp or a first validity code;
and/or
the second valid identifier comprises at least one of a second validity stamp or a second validity code.

16. The method according to any of claims 11 to 14, wherein the first information comprises a first identifier configured to identify the network device, and the first identifier is used for one of:
in the case that any second identifier in an identifier set configured matches the first identifier, the first device determines to camp on the network where the network device is located; and
in the case that any second identifier in the identifier set configured does not match the first identifier, the first device determines not to camp on the network where the network device is located.

17. The method according to any of claims 11 to 16, wherein the first information is configured to indicate a first parameter that is recommended, and the first parameter is used for one of:
in the case that a second parameter of the first device is greater than or equal to the first parameter, the first device determines to send the second information;
in the case that the second parameter of the first device is less than the first parameter, the first device determines not to send the second information;
in the case that the second parameter of the first device is greater than or equal to a third parameter, the first device determines to send the second information, wherein the third parameter is determined based on the first parameter; and
in the case that the second parameter of the first device is less than the third parameter, the first device determines not to send the second information.

18. The method according to claim 17, wherein the first parameter is a threshold value of a reference signal, and the second parameter is a measured value of the reference signal; or the first parameter is a first UL transmit power, and the second parameter is a second UL transmit power.

19. The method according to claim 17, wherein the second parameter is a second UL transmit power, the third parameter is a third UL transmit power, and the first parameter comprises at least one of a first UL transmit power, a UL transmit power parameter, a path loss, or a UL transmit power offset.

20. The method according to any of claims 11 to 19, wherein the network device comprises one of a base station, a relay, an Integrated Access Backhaul (IAB), a user equipment (UE), and a repeater.

21. An information processing method, comprising:
sending, by a network device, a first signal to a first device, wherein the first signal comprises first information; and
determining, by the first device, a first operation based on the first information, wherein the first operation comprises at least one of:
whether to camp on a network where the network device is located; or
whether to send second information.

22. The method according to claim 21, wherein the first information comprises a first identifier configured to identify the network device, and determining the first operation based on the first information comprises one of:
based on that any second identifier in an identifier set configured matches the first identifier, determining to camp on the network where the network device is located; and
based on that any second identifier does not match the first identifier, determining not to camp on the network where the network device is located.

23. The method according to claim 21 or 22, wherein the first information comprises a valid identifier set, the valid identifier set comprises at least one first valid identifier, and determining the first operation based on the first information comprises:
determining, based on whether a second valid identifier of the first device matches the first valid identifier, whether to send the second information.

24. The method according to any of claims 21 to 23, wherein the first information is configured to indicate a first parameter that is recommended, and determining the first operation based on the first information comprises one of:
based on that a second parameter of the first device is greater than or equal to the first parameter, determining to send the second information;
based on that the second parameter of the first device is less than the first parameter, determining not to send the second information;
based on that the second parameter of the first device is greater than or equal to a third parameter, determining to send the second information, wherein the third parameter is determined based on the first parameter; and
based on that the second parameter of the first device is less than the third parameter, determining not to send the second information.

25. A first device, comprising:
a first transceiver module configured to receive a first signal, wherein the first signal comprises first information; and
a first processing module configured to determine a first operation based on the first information, wherein the first operation comprises at least one of:
whether to camp on a network where a network device is located; or
whether to send second information.

26. A network device, comprising:
a second transceiver module configured to send a first signal, wherein the first signal comprises first information configured for a first device to determine a first operation, and the first operation comprises at least one of:
whether to camp on a network where the network device is located; or
whether to send second information.

27. A first device, comprising one or more processors, wherein the first device is configured to perform the information processing method according to any of claims 1 to 10.

28. A network device, comprising one or more processors, wherein the network device is configured to perform the information processing method according to any of claims 11 to 20.

29. A communication system, comprising a first device and a network device, wherein the first device is configured to perform the information processing method according to any of claims 1 to 10, and the network device is configured to perform the information processing method according to any of claims 11 to 20.

30. A storage medium having instructions stored thereon, which when executed on a communication device, cause the communication device to perform the information processing method according to any of claims 1 to 10, any of claims 11 to 20, or any of claims 21 to 24.
